# EUROPEAN PATENT SPECIFICATION

(11) **EP 1 776 417 B1**
(45) Date of publication and mention of the grant of the patent: **23.09.2009**
(21) Application number: 05771696.1
(22) Date of filing: 13.07.2005
(51) Int. Cl.: C08L 23/08, C08J 7/04, C08L 23/04, C09J 123/08, C08L 33/08, C08J 5/18, B32B 27/32

(54) **COMPOSITION COMPRISING ETHYLENE - ACRYLATE COPOLYMER AND POLYOLEFIN AND TACKIFIER**
ZUSAMMENSETZUNG, ENTHALTEND ETHYLEN-ACRYLAT-COPOLYMER UND POLYOLEFINE UND KLEBRIGMACHER
COMPOSITION A BASE DE COPOLYMERES D'ETHYLENE ET DE POLYOLEFINES

(30) Priority: 15.07.2004 US 588225 P
(43) Date of publication of application: 25.04.2007
(73) Proprietor: E.I. DU PONT DE NEMOURS AND COMPANY, Wilmington, DE 19898 (US)
(72) Inventor: KENDIG, Terrance, D., Newark, Delaware 19711 (US); TANNY, Stephen, R., Newark, Delaware 19711 (US)
(74) Representative: Heinemann, Monica
(86) International application number: PCT/US2005/025006
(87) International publication number: WO 2006/019922

(56) References cited:
- WO-A-97/28960
- WO-A-03/093364
- WO-A-20/05071009

## Description

The invention relates to a composition comprising an ethylene copolymer, polyolefin, and a tackifier; to a multilayer structure produced therefrom; and to a package comprising the multilayer structure.

### BACKGROUND OF THE INVENTION

The packaging industry uses a variety of films and containers produced from various thermoplastic resins and compositions for packaging food and non-food products. These packages provide protection (e.g., protection from mechanical damage, barriers to air or moisture) of the product contained within until the consumer is ready to use the product. It is also desirable for the package to be designed to allow the consumer easy access to the product at the appropriate time.

Materials used in packaging include fluoropolymers such as polychlorotrifluoroethylene (PCTFE), which has high moisture and oxygen barrier properties, allowing greater shelf life of the product packaged. There is no polymer known for effective lamination of PCTFE to PVC or PET in extrusion processes or for good adhesion to fluoropolymers such as PCTFE because of their inherent properties. See, e.g., US Patent 6,649,005.

Existing adhesive systems that bond to PCTFE include solvent-borne and systems based on, among others, ethylene/vinyl acetate (EVA) copolymers, styrene butadiene or amorphous polyester. The (water-based) adhesives are applied by roller or gravure systems to carrier webs (e.g. 25.4 µm (1 mil)-thick PVC) and require drying at elevated temperature to remove the solvents and maintain low amounts of residual solvents (e.g. removing the water by running the carrier web through a drying oven and then hot nipping the materials together). The adhesive coatings produced in this manner are generally very thin and are limited to ingredients that are soluble in solvent systems. Generally a cure time of up to a week is required before use when current wet laminating processes.

WO 03/093364 relates to a sealant composition comprising at least a copolymer of propylene and α-olefins, and at least a copolymer of ethylene and alkyl acrylate, wherein the alkyl acrylate is present in an amount ranging from about 1 to less than 9 weight percent, relative to the weight of the sealant composition. It also relates to a multilayer film or a packaging comprising a sealant layer comprising such a composition.

WO 97/28960 provides a heat sealable, yet peelable film comprising at least one metallocene catalyst based polyethylene sealant material, and at least one peelable additive material such as polybutylene and/or polypropylene, copolymers and terpolymers thereof.

### SUMMARY OF THE INVENTION

The invention includes a multilayer structure comprising at least a first layer comprising a composition comprising or produced from
(a) 10 to 80 weight % of at least one ethylene/alkyl (meth)acrylate copolymer; (b) 5 to 60 weight % of at least one polyolefin; (c) 0.5 to 35 weight % of at least one tackifying resin; and (d) 0 to 35 weight % of filler;
wherein the ethylene copolymer comprises repeat units derived from ethylene, an alkyl (meth)acrylate, and an optional comonomer, wherein the optional comonomer includes maleic anhydride, glycidyl methacrylate, carbon monoxide, or combinations of two or more thereof;
wherein the polyolefin includes polyethylene homopolymer, polypropylene homopolymer, copolymer comprising ethylene, or copolymer comprising propylene, or combinations of two or more thereof;
wherein the tackifying resin includes coumarone-indene resin, terpene resin, butadiene-styrene resin, hydrocarbon resin, rosin material, or combinations of two or more thereof; and
wherein the optional filler includes particles of inorganic compound,
at least a second layer comprising at least one fluoropolymer, and optionally one or more optional layers comprising foil, paper, polyester, polyamide, polyolefin, polyethylene vinyl alcohol, polyethylene vinyl acetate, ethylene acid copolymer, ionomer of the ethylene acid copolymer, polyvinyl chloride, polyvinylidene chloride, anhydride-modified polyolefin, or combinations of two or more thereof.

The invention also includes the use of the composition for adhesion of a fluoropolymeric material to a material including foil, paper, polyester, polyamide, polyolefin, polyethylene vinyl alcohol, polyethylene vinyl acetate, an acid copolymer, ionomer of the acid copolymer, polyvinyl chloride, polyvinylidene chloride, anhydride-modified polyolefin, or combinations of two or more thereof. An ethylene acid copolymer includes repeat units derived from ethylene and (meth)acrylic acid.

The invention further includes an article including a blister pack, a rigid container, or a pouch comprising the composition and/or multilayer structure disclosed above.

The invention provides a package in the form of a thermoformed blister pack comprising a structure comprising at least one layer comprising the ethylene/alkyl (meth)acrylate-polyolefin-tackifier composition described above; at least one layer comprising a fluoropolymer, especially polychlorotrifluoroethylene (PCTFE); and at least one layer selected from the group consisting of foil, paperboard, high-density polyethylene (HDPE), polypropylene (PP), high-impact polystyrene (HIPS), amorphous polyethylene terephthalate (APET), crystalline polyethylene terephthalate (CPET), polyvinyl chloride (PVC), polyacrylonitrile homopolymers and copolymers, polyacetal and polyacetal copolymers.

### DETAILED DESCRIPTION OF THE INVENTION

"Copolymer" means a polymer containing two or more different monomers and can include dipolymers, terpolymer, or tetrapolymer. "Copolymer of various monomers" means a copolymer whose units are derived from the various monomers.

"(Meth)acrylic acid" means methacrylic acid and/or acrylic acid. "(Meth)acrylate" means methacrylate and/or acrylate.

Thermoplastic compositions are polymeric materials that can flow when heated under pressure and can be used for preparing films and multilayer structures by extrusion processing. Melt index (MI) is the mass rate of flow of a polymer through a specified capillary under controlled conditions of temperature and pressure and is determined according to ASTM 1238 at 190°C using a 2.16 kg weight, with values of MI shown in g/10 minutes. The thermoplastic compositions described herein.

"Foil" refers to a thin, flexible film or sheet such as metal (e.g., aluminum) or to a multilayer structure in which at least one layer of metal is adhered to additional layers of other materials, generally at least one exterior layer of the multilayer structure is a layer of metal (e.g., aluminum).

Fluorine-containing polymers (fluoropolymers or fluorinated polymers) are an important class of polymers including, for example, fluoroelastomers and fluoroplastics. Among this broad polymer class are polymers of high thermal stability, polymers exhibiting chemical (and solvent) resistance, and polymers displaying usefulness along a broad spectrum of temperatures. Many fluoropolymers are almost totally insoluble in a wide variety of organic solvents; see, e.g., F. W. Billmeyer, Textbook of Polymer Science, 3rd ed., pp. 398-403, John Wiley & Sons, New York (1984). Fluoroelastomers, such as the copolymers of vinylidene fluoride with other ethylenically unsaturated halogenated monomers (e.g., hexafluoropropylene) have utility in high temperature applications including seal gaskets and linings. See, e.g." Brullo, R. A., "Fluoroelastomer Rubber for Automotive Applications," Automotive Elastomer & Design, June 1985, "Fluoroelastomers Seal Up Automotive Future," Materials Engineering, October 1988, and "Fluorinated Elastomers," Kirk-Othmer, Encyclopedia of Chemical Technology, 3rd ed., Vol. 8, pp. 500-515, John Wiley & Sons, New York (1979).

Fluoroplastics, such as PCTFE, polytetrafluoroethylene, copolymers of tetrafluoroethylene and hexafluoropropylene, and poly(vinylidene fluoride), have numerous electrical, mechanical, and chemical applications. Fluoroplastics are useful, for example, as wire coatings, electrical components, seals, and in solid and lined pipes and piezoelectric detectors. See, for example, "Organic Fluorine Compounds," Kirk-Othmer, Encyclopedia of Chemical Technology, Vol. 11, pp. 20, 21, 32, 33, 40, 41, 48, 50, 52, 62, 70, and 71, John Wiley & Sons, New York (1980). These fluoroplastics may also be used in a number of packaging applications. A number of homopolymers and copolymers derived from polymerization of chlorotrifluoroethylene are available commercially under the tradename Aclar^{®} from Honeywell, Inc., Morristown, NJ, such as PCTFE.

The invention is not limited by adhesive layer thickness or combination of components to gain the desired adhesive strength. The adhesive composition disclosed here can be free of solvent, addressing environmental concerns regarding solvent use. No-solvent adhesive systems are simpler and offer more flexibility, which may improve economics in manufacturing of the finished packaging web. The invention disclosed herein can allow the material to be ready for immediate processing after bonding.

The composition, which can be useful as an adhesive for bonding fluoropolymers such as PCTFE to a second substrate, can also comprise or be produced from (a) 15 to 70 weight % of at least one ethylene/alkyl (meth)acrylate copolymer; (b) 15 to 45 weight % of at least one polyolefin; (c) 10 to 20 weight % of at least one tackifying resin; and (d) optionally filler.

The composition can also comprise or be produced from (a) 40 to 70 weight % of at least one ethylene/alkyl (meth)acrylate copolymer; (b) 15 to 45 weight % of at least one polyolefin; and (c) 10 to 20 weight % of at least one tackifying resin.

### Ethylene/alkyl (meth)acrylate copolymers

"Ethylene/alkyl (meth)acrylate copolymers" and "ethylenel(meth)acrylate copolymers" are used interchangeably herein and denote a thermoplastic ethylene copolymer derived from the copolymerization of ethylene monomer and at least one alkyl acrylate or alkyl methacrylate comonomer, wherein the alkyl group contains from 1 to 8 carbon atoms. Examples of alkyl acrylates include methyl acrylate, ethyl acrylate and butyl acrylate. "Ethylene/methyl acrylate (EMA)" means a copolymer of ethylene (E) and methyl acrylate (MA). "Ethylene/ethyl acrylate (EEA)" means a copolymer of ethylene (E) and ethyl acrylate (EA). "Ethylene/butyl acrylate (EBA)" means a copolymer of ethylene (E) and butylacrylate (BA).

The amount of the alkyl acrylate comonomer incorporated into the ethylene/(meth)acrylate copolymer can vary from 0.1 up to as high as 40 wt% of the total copolymer or even higher. The choice of the alkyl group can be one or more C₁-C₈ or C₁-C₄ alkyls. The alkyl (meth)acrylate comonomer has a concentration range of from 5 to 30 wt%, alternatively from 9 to 27 wt%, of the total ethylene/(meth)acrylate copolymer. For example, methyl acrylate can be present in a concentration range of from 5 to 30 wt%, alternatively from 9 to 25 wt%, or 9 to 24 wt%, of the ethylene/(meth)acrylate dipolymer.

A mixture of two or more ethylene/alkyl (meth)acrylate copolymers can be used. For example, useful properties may be obtained when two ethylene/alkyl acrylate copolymers are used in blends including those where the ethylene/alkyl acrylate component comprises two different ethylene/methyl acrylate copolymers. One may replace a single EMA grade in a blend with an equal amount of a properly selected mixture of two EMA grades, where the mixture has the same wt% methyl acrylate content and melt index as the single EMA grade replaced. By combining two different properly selected EMA copolymer grades, modification of the properties of the composition may be achieved as compared with compositions containing only a single EMA resin grade.

The ethylene/alkyl (meth)acrylate copolymers may also optionally include at least one additional comonomer selected from the group consisting of (meth)acrylic acid, maleic anhydride, glycidyl methacrylate and carbon monoxide to form terpolymers such as ethylene/isobutyl acrylate/methacrylic acid, ethylene/methyl acrylate/maleic anhydride, ethylene/butyl acrylate/glycidyl methacrylate (EBAGMA) and ethylene/butyl acrylate/carbon monoxide (EBACO).

Ethylene/(meth)acrylate copolymers can be prepared by processes well known in the polymer art using either autoclave or tubular reactors. The copolymerization can be run as a continuous process in an autoclave. For example, ethylene, an alkyl (meth)acrylate such as methyl acrylate, and optionally a solvent such as methanol (see US Patent 5,028,674) are fed continuously into a stirred autoclave of the type disclosed in US Patent 2,897,183, together with an initiator. The rate of addition may depend on polymerization temperature, pressure, and concentration of the methyl acrylate monomer in the reaction mixture needed to achieve the target composition of the copolymer. In some cases, it may be desirable to use a telogen such as propane, to control the molecular weight. The reaction mixture may be continuously removed from the autoclave. After the reaction mixture leaves the reaction vessel, the copolymer may be separated from the unreacted monomers and solvent (if solvent was used) by conventional means, e.g., vaporizing the nonpolymerized materials and solvent under reduced pressure and at an elevated temperature. Autoclave acrylate copolymers are available from Voridian under the name EMAC™, from ExxonMobil under the name Optema™, and from Atofina under the name of Lotryl™.

Tubular reactor-produced ethylene/(meth)acrylate copolymer can be distinguished from the more conventional autoclave produced ethylene/(meth)acrylate as generally known in the art. Thus the term or phrase "tubular reactor produced" ethylenel(meth)acrylate copolymer denotes an ethylene copolymer produced at high pressure and elevated temperature in a tubular reactor, wherein the inherent consequences of dissimilar reaction kinetics for the respective ethylene and alkyl (meth)acrylate (e.g. methyl acrylate) comonomers is alleviated or partially compensated by the intentional introduction of the monomers along the reaction flow path within the tubular reactor. Such a tubular reactor copolymerization technique can produce a copolymer having a greater relative degree of heterogeneity along the polymer backbone (a more blocky distribution of comonomers), tend to reduce the presence of long chain branching, and produce a copolymer characterized by a higher melting point than one produced at the same comonomer ratio in a high pressure stirred autoclave reactor.

Tubular reactor produced ethylene/(meth)acrylate copolymers of this nature are commercially available from E. I. du Pont de Nemours and Company, Wilmington, Delaware (DuPont).

The manufacturing of the tubular reactor ethylene/(meth)acrylate copolymers is well known to one skilled in the art such as disclosed in US Patents 3,350,372; 3,756,996; and 5,532,066. For additional discussion regarding the differences between tubular reactor produced and autoclave produced ethylene/alkyl acrylate copolymers, see Richard T. Chou, Mimi Y. Keating and Lester J. Hughes, "High Flexibility EMA made from High Pressure Tubular Process", Annual Technical Conference - Society of Plastics Engineers (2002), 60th(Vol. 2), 1832-1836.

Ethylene/alkyl acrylate copolymers are available from DuPont.

The ethylene/(meth)acrylate copolymers can vary in molecular weight. The specific selection of the melt index (MI) grade of polymer component(s) to be used may be influenced by the process used to create the multilayer structure. For example, ethylene/(meth)acrylate copolymers having MI's from 0.1 to 100 g/10 min, 0.5 to 50 and most preferably from 0.50 to 30 g/10 min.

Preferred are compositions wherein said ethylenel(meth)acrylate copolymer of component is prepared in a tubular reactor.

### Polyolefins

Polyolefins can be selected from homopolymers and copolymers of olefins wherein the olefin monomers have from two to eight carbon atoms. Polyolefins are selected from the group consisting of polyethylene homopolymers, polypropylene homopolymers, copolymers comprising ethylene, and copolymers comprising propylene. Polyethylenes (PE) useful for the compositions described herein can be prepared by a variety of methods, for example but not limitation, the well-known Ziegler-Natta catalyst polymerization (see for example U.S. Patents Number 4,076,698 and U.S. Patent Number 3,645,992), metallocene catalyst polymerization (see for example U.S. Patent Number 5,198,401 and U.S. Patent Number 5,405,922), Versipol® catalyst polymerization and by free radical polymerization. The polymerization can be conducted as solution phase processes or gas phase processes. Polyethylene polymers useful herein can include linear polyethylenes such as high density polyethylene (HDPE), linear low density polyethylene (LLDPE), very low or ultralow density polyethylenes (VLDPE or ULDPE) and branched polyethylenes such as low density polyethylene (LDPE). The densities of polyethylenes suitable for use in the present invention range from 0.865 g/cm³ to 0.970 g/cm³. Linear polyethylenes for use herein can incorporate alpha-olefin comonomers such as butene, hexene or octene to decrease their density within the density range so described. The term "polyethylene" when used herein is used generically to refer to any or all of the polymers comprising ethylene described above.

A polyethylene of note is a copolymer of ethylene and 1-butene. Such a copolymer with 12.6 weight % 1-butene, having a melt index of 3.5 is available as Exact^{®} 3035 from ExxonMobil.

Another polyethylene of note is a copolymer of ethylene and 1-octene. Such a copolymer with 12 wt% octene, having a melt index of 3.5 is available as Engage^{®} 8450 from DuPont Dow Elastomers.

Polypropylene (PP) polymers include homopolymers, random copolymers, block copolymers and terpolymers of propylene including copolymers of propylene with other olefins such as ethylene, 1-butene, 2-butene and the various pentene isomers, and of propylene with ethylene and one other olefin. Random copolymers, also known as statistical copolymers, are polymers in which the propylene and the comonomer(s) are randomly distributed throughout the polymeric chain in ratios corresponding to the feed ratio of the propylene to the comonomer(s). Block copolymers are made up of chain segments consisting of propylene homopolymer and of chain segments consisting of, for example, random copolymer of propylene and ethylene. PP generically refers to any or all of the polymers comprising propylene.

Homopolymers and random copolymers can be manufactured by any known process such as in the presence of catalyst systems known as Ziegler-Natta, based on organometallic compounds and on solids containing titanium trichloride.

Block copolymers can be manufactured similarly, except that propylene is generally first polymerized by itself in a first stage and propylene and additional comonomers such as ethylene are then polymerized, in a second stage, in the presence of the polymer obtained during the first. Each of these stages can be carried out, for example, in suspension in a hydrocarbon diluent, in suspension in liquid propylene, or else in gaseous phase, continuously or noncontinuously, in the same reactor or in separate reactors.

Additional information relating to block copolymers and to their manufacture may be found in "Block Copolymers" edited by D. C. Allport and W. H. Janes, Applied Science Publishers Ltd (1973).

The polyolefins can also be modified by the incorporation of low levels (e.g., less than 3 weight %) of one or more polar monomers including, but not limitation, vinyl acetate, alkyl acrylates, carbon monoxide, glycidyl methacrylate, (meth)acrylic acid and maleic anhydride. The incorporation of these polar comonomers can be accomplished by copolymerization or by grafting.

Blends of two or more polyolefins can be used, e.g., LLDPE can be blended with either LDPE or HDPE to provide polyethylene blends suitable for use in this invention. Another suitable polyolefin blend is a blend of polypropylene and poly(1-butene) (PB).

### Tackifying Resins

Compositions of this invention contain tackifying resin (tackifier). Tackifier may be any tackifier known in the art such as those listed in U.S. Patent 3,484,405. Such tackifiers include a variety of natural and synthetic resins and rosin materials. The resins can be liquid, semi-solid to solid, complex amorphous materials generally in the form of mixtures of organic compounds having no definite melting point and no tendency to crystallize. Such resins are insoluble in water and can be of vegetable or animal origin, or can be synthetic resins. The resins can provide substantial and improved tackiness to the composition. Suitable tackifiers include, but are not limited to, the resins discussed below.

A class of resins can be the coumarone-indene resins, such as the *para*-coumarone-indene resins. The coumarone-indene resins can have a molecular weight that ranges from 500 to 5,000. Examples of resins of this type that are available commercially include those materials marketed as "Picco^{®}"-25 and "Picco^{®}"-100.

Another class of resins can be the terpene resins, including also styrenated terpenes. These terpene resins can have a molecular weight range from 600 to 6,000. Typical commercially available resins of this type are marketed as "Piccolyte^{®}" S-100, as "Staybelite^{®}" Ester" #10, which is a glycerol ester of hydrogenated rosin, and as "Wingtack^{®}" 95, which is a polyterpene resin.

A third class of resins can be the butadiene-styrene resins having a molecular weight ranging from 500 to 5000. A typical commercial product of this type is marketed as "Buton^{®}" 100, a liquid butadiene-styrene copolymer resin having a molecular weight of 2,500.

A fourth class of resins can be the polybutadiene resins having a molecular weight ranging from 500 to 5,000. A commercially available product of this type is that marketed as "Buton^{®}" 150, a liquid polybutadiene resin having a molecular weight of 2,000 to 2,500.

A fifth class of resins can be the so-called hydrocarbon resins produced by catalytic polymerization of selected fractions obtained in the refining of petroleum, and having a molecular weight range of 500 to 5,000. Examples of such resin are those marketed as "Piccopale^{®}"-100, and as "Amoco^{®}" and "Velsicol^{®}" resins. Similarly, polybutenes obtained from the polymerization of isobutylene may be included as a tackifier.

The tackifier may also include rosin materials, low molecular weight styrene hard resins such as the material marketed as "Piccolastic^{®}" A-75, disproportionated pentaerythritol esters, and copolymers of aromatic and aliphatic monomer systems of the type marketed as "Velsicol^{®}" WX-1232. The rosin that may be employed in the present invention may be gum, wood or tall oil rosin but preferably is tall oil rosin. Also the rosin material may be modified rosin such as dimerized rosin, hydrogenated rosin, disproportionated rosin, or esters of rosin. Esters can be prepared by esterifying the rosin with polyhydric alcohols containing from 2 to 6 alcohol groups.

The tackifying resin of note is one or more coumarone-indene resins, terpene resins, butadiene-styrene resins, hydrocarbon resins, and rosin materials.

A terpene resin-based tackifier of note is derived from poly-limonene, a monomer recovered from the citrus industry, available as Piccolyte^{®} C115 from (Pinova).

Another tackifier resin of note is Regalite^{®} R1125 available from Eastman.

A more comprehensive listing of tackifiers, which can be employed in this invention, is provided in the TAPPI CA Report #55, February 1975, pages 13-20, a publication of the Technical Association of the Pulp and Paper Industry, Atlanta, GA, which lists well over 200 tackifier resins that are commercially available.

The tackifier can also be a blend of two or more individual tackifiers.

The tackifier component may be either added directly to other components of the invention or pre-melt compounded into a masterbatch formulation. Such technology is disclosed in US Patent 6,255,395 and Japanese patent JP 2002 173,653. For example, poly-limonene may be blended with an ethylene/octane copolymer to prepare a tackifier masterbatch that can be added to the remaining components of the composition in a subsequent blending operation.

### Fillers

Addition of fillers can function as a way to increase the temperature resistance and affect peel seal characteristics of the composition.

Peelable heat seals commonly can be designed to have three different failure modes when peeling seal to seal or seal to differentiated substrate. Failure can be interfacial, delamination or cohesive when peeling one from the other under stress at various angles of peel and speeds. Interfacial seals are designed to fail at the heat seal interface of the selected sealing surface (i.e. the sealant layer peels cleanly away from the substrate layer). Seal strength can be determined by temperature, pressure and dwell time. Seals that do not peel cleanly can contaminate the contents of the package with fragments of the seal or lidding.
Interfacial peelable seals are desirable to prevent such contamination. Delamination heat seals are designed to fail at an internal interface of a multilayer film structure. This designed failure interface is in a chosen layer somewhere behind the actual heat seal layer in the film structure. Thickness and adhesion to the chosen internal layer interface may determine strength of the seal during peeling. In this case the entire sealant layer transfers to the substrate as the film structure is being peeled away. Cohesive seal failure by design fails within the actual sealant layer itself. When peeling the seal under stress and speed, the seal layer itself splits within and transfers a portion of the sealant material to the sealant substrate. Internal strength of the sealant material is the determining factor for actual strength of the heat seal.

A filler can include particles of inorganic compounds, such as minerals and salts. Filler that can be included in the composition of the present invention on a weight basis can be a function of the density of the filler. Particle size and shape of the filler may have an effect on properties of blends. Fine particle size fillers generally have a tendency to result in higher blend viscosities and they are also more expensive. No. 9 Whiting (about 95% through 325 mesh) represents a viable midpoint in coarseness, availability, and cost. More preferred fillers are calcium carbonate and talc (essentially Mg₃Si₄O₁₀(OH)₃), and most preferred is talc. For example, filler can be present in the composition from 0 weight % to 35 weight %, or to 30 weight %.

Fillers may be pre-blended with an ethylene/alkyl acrylate or polyolefin in a masterbatch prior to blending into a composition of this invention. For example, talc may be blended with ethylene/methyl acrylate (20 weight % MA) copolymer to prepare a filler masterbatch that can be added to the remaining components of the composition in a subsequent blending operation.

Fillers may also be polymeric such as, for example, polystyrenic resins including homopolymers of styrene or alpha methylstyrene or copolymers of styrene with unsaturated monomers such as ethylene, butene, butadiene, or isoprene. Specific examples include, but are not limited to ethylene/styrene random or block copolymers, ethylene/butadiene random or block copolymers, and hydrogenated and partially hydrogenated butadiene/styrene copolymers. Polystyrenics can be further modified for enhanced impact properties and usually referred to as High Impact Polystyrene or high-impact polystyrene (HIPS). Blends and mixtures of polystyrenics may be used. Specific examples include

HIPS from Nova Chemicals or ethylene/styrene copolymers sold by Dow Chemical.

Other additives can be present in the composition such as one or more antioxidants and thermal stabilizers, ultraviolet (UV) light stabilizers, colorants, pigments and dyes, fillers, delustrants, anti-slip agents, plasticizers, anti-block agents, compatibilizers, components for modifying surface characteristics such as Coefficient of Friction (COF), anti static and anti fog agents or other processing aids. These additives may be present in the compositions used in this invention in quantities that are generally from 0.01 to 20 wt%, or from 0.1 to 15 wt%, of the composition (the percentages of such additives are not included in the total weight percentages of the composition in the Summary of the Invention). Many such additives may be present in from 0.01 to 5 wt%.

The compositions can further comprise from 0.01 to 20 weight % of at least one additive selected from antioxidants, thermal stabilizers, ultraviolet light stabilizers, colorants, pigments, dyes, delustrants, anti-slip agents, plasticizers, anti-block agents, compatibilizers, components for modifying surface characteristics, anti static agents, antifog agents and other processing aids.

Antioxidants that may be present in from 0.01 to 1 weight % are available under the trade name Irganox^{®} from Ciba Geigy Inc., Tarrytown, New York. For example, phenolic antioxidants such as Irganox^{®} E201 or Irganox^{®} 1010 or its derivatives may be added to the composition.
Additives for modifying surface characteristics such as coefficient of friction, for anti-blocking or for chill roll release that may be present in amounts from 0.01 to 5 weight %. For example, such an additive is a dispersion of silicon dioxide (2 weight %) in an ethylene/ methacrylic acid copolymer used as carrier concentrate for blending into a resin (available from DuPont as Conpol^{®} 20B). ,

The optional incorporation of such conventional ingredients into the compositions can be carried out by any known process. This incorporation can be carried out, for examples, by dry blending, by extruding a mixture of the various constituents or by the conventional masterbatch technique.

The compositions can provide adhesion for laminating fluoropolymer-containing substrates to a second substrate including foil, paperboard, HDPE, PP, HIPS, amorphous polyethylene terephthalate (APET), crystalline polyethylene terephthalate (CPET), polyvinyl chloride (PVC), polyacrylonitrile homopolymers and copolymers, polyacetal, polyacetal copolymers, and combinations of two or more thereof.

The invention provides a multilayer structure comprising at least one layer comprising the ethylene/alkyl (meth)acrylate-polyolefin-tackifier composition described above and at least one layer comprising one or more fluoropolymers such as PCTFE.

The invention also provides a multilayer structure comprising at least one layer comprising the ethylene/alkyl (meth)acrylate-polyolefin-tackifier composition described above, at least one layer comprising fluoropolymers, and at least one additional layer comprising a material including foil, paper, polyesters, polyamides, polyolefins, polyethylene vinyl alcohol, polyethylene vinyl acetate, ethylene/(meth)acrylic acid copolymers and ionomers thereof, polyvinyl chloride, polyvinylidene chloride, anhydride-modified polyolefins, or combinations of two or more thereof.

Structures comprising at least one layer comprising the ethylene/alkyl (meth)acrylate-polyolefin-tackifier composition can be prepared by extrusion coating or coextrusion.

In extrusion coating, a molten curtain of the ethylene/alkyl (meth)acrylate-polyolefin-tackifier composition is laid down on a PCTFE film substrate moving at high speeds (typically from 30.5 to 305 or 91 to 244 meter per minute (100 to 1000 feet per minute and preferably from 300 to 800 feet per minute). The melt curtain is formed by extruding the composition through a flat die. The temperature of the composition as it leaves the die can be between 290 and 340°C or 310 to 330°C. The molten composition is then cooled as the film substrate comes into contact with a cold roll.

A multilayer structure can be prepared by coextrusion by melting granulates of the various components. The molten polymers can be passed through a die or set of dies to form layers of molten polymers that are processed as a laminar flow. The molten polymers are cooled to form a layered structure. Molten extruded polymers can be converted into a film using a suitable converting technique such as blown film extrusion, cast film extrusion and cast sheet extrusion. Coextrusion of the composition with a fluoropolymer allows formation of a packaging web (for example, a forming, pouch or lidding web) having a seal layer comprising that composition with a fluoropolymer layer in a single step.

An example of a multilayer film prepared by either of these processes is a two-layer film consisting of a layer of PCTFE from 17.8 to 25.4 µm (0.7 to 1.0 mil) thick and a layer of a composition of this invention from 5 to 25.4 µm (0.2 to 1.0 mil) thick.

Multilayer structures can also be prepared by extrusion lamination such as laying down a molten curtain of the ethylene/alkyl (meth)acrylate-polyolefin-tackifier composition between the fluoropolymer film and a second substrate moving at high speeds (from 30.5 to 305 or 91 to 244 meter per minute (100 to 1000 or 300 to 800 feet per minute)) as the films come into contact with a cold roll.
The temperature of the ethylene/alkyl (meth)acrylate-polyolefin-tackifier composition as it leaves the die is preferably between 270 and 340°C and most preferably between 290 and 330°C. The air gap between the die exit and cold roll is typically about 76 to 381 mm (3 to 15 inches), preferably from 127 to 254 mm (5 to 10 inches). Higher temperatures may give higher adhesion values, subject to the limitations of the thermal stability of the polymer composition. Lower line speeds and higher air gaps may favor adhesion. The time in the air gap (TIAG), defined as the air gap divided by the line speed, can be between 50 and 100 ms for optimal adhesion in extrusion lamination. See V. Antonov and A. Soutar, 1991 TAPPI PLC Conference Proceedings, p 553. The laminate is cooled on a cold roll and hauled off at a line speed of between 30.5 to 305 meter per minute, preferably between 91 to 244 meter per minute (100 and 1000 feet/minute, preferably between 300 and 800 feet/minute).

Films and/or substrates can be pre-treated or treatment can be applied in line to modify their surface characteristics and impact bonding strength. Treatments can include, but are not limited to, corona treatment, flame treatment under oxidizing or reducing conditions, using e.g. polyethylene imines (sold by MICA) or urethane (sold by Rohm & Haas).

Films or sheets used as the second substrate in lamination processes to prepare multilayer structures can be made by virtually any method for film forming known to those skilled in this art. The film can be either a single layer or multilayer polymeric film. As such, the film and film structures can be typically cast, extruded, co-extruded or laminated, including orientation (either uniaxially or biaxially) by various methodologies (e.g., blown film or mechanical stretching). Various additives disclosed above can be present in the film layer(s).

A multilayer polymeric sheet can involve a selection from several layers including, but not limited to, an outermost structural or abuse layer, an inner barrier layer, bulking layer and/or adhesive layer, and an innermost layer making contact with and compatible with the intended contents of the package and capable of forming the necessary seals (e.g. most preferably heat-sealable) to itself and the other parts of the package. Other layers may also be present to serve as adhesive or "tie" layers to help bond these layers together.

The outermost structural or abuse layer can be oriented polyester or oriented PVC, can also include oriented polypropylene, oriented polyamide (nylon) or polyethylene such as high density polyethylene or paper or foil. This layer, when optically transparent, may be reverse printable and unaffected by the sealing temperatures used to make the package, as the package is sealed through the entire thickness of the multilayer structure. When the outer structural or abuse layer is not optically transparent, this layer can be surface printed and then optionally coated with a protective coating or lacquer. The thickness of this layer can be such that controls the stiffness of the film, and may range from 10 µm to 100 µm, or 12 µm to 50 µm.

The inner layer can include one or more bulking layers. This layer can add to create a structure that has a final, predefined thickness by using a common polymer that is of low cost. Bulking layers can be, for example, polyolefins, polyolefin polar copolymers, polyester and or blends of various bulking layer components. A bulking layer is also suitable for incorporation of regrind and scrap generated in the manufacturing process. For example, scrap generated from material that, for one reason or another, is not suitable for sale, or material that is generated by trimming the edges off a semi-finished roll, can be ground up and incorporated into the inner layer providing bulk at relatively low cost.

The inner layer can include one or more adhesive layers. This adhesive layer can adhere the outer structural layer to the inner layer, the inner layer to the innermost layer or, in the case where the inner layer may only be acting as an adhesive, bonding the outer layer directly to the innermost layer.

The structure and barrier layers can be combined to comprise several layers of polymers that provide effective barriers to moisture and oxygen and bulk mechanical properties suitable for processing and/or packaging the product, such as clarity, toughness and puncture-resistance. In some applications, the functions of structure and barrier layers may be combined in a single layer of a suitable resin. For example, nylon or PET are suitable for both structure and barrier functions.

Polyamides (nylon) include aliphatic polyamides (aliphatic polyamides, aliphatic copolyamides, and blends or mixtures of these), amorphous polyamides, or a mixture thereof. Aliphatic polyamides include polyamide 6, polyamide 6.66, blends and mixtures thereof. Polyamides 6.66 are commercially available under the tradenames "Ultramid^{®} C4" and "Ultramid^{®} C35" from BASF, or under the tradename "Ube^{®}5033FXD27" from Ube Industries Ltd. Polyamide 6 is commercially available under the tradename Capron^{®} from Honeywell International, tor example.

The film may further comprise other polyamides such as those disclosed in US Patents 5,408,000; 4,174,358; 3,393,210; 2,512,606; 2,312,966 and 2,241,322.

The film may also comprise partially aromatic polyamides including aromatic copolyamides such as amorphous nylon resins 6-1/6-T commercially available under the tradename Selar^{®} PA from DuPont or commercially available under the tradename Grivory^{®} G 21 from EMS-Chemie AG.

lonomers are copolymers of an olefin such as ethylene and an unsaturated carboxylic acid, such as acrylic acid or methacrylic acid and optionally softening monomers wherein at least one or more alkali metal, transition metal, or alkaline earth metal cations, such as sodium, potassium or zinc, are used to neutralize some portion of the acidic groups in the copolymer. For example, "Ethylene/(meth)acrylic acid (E/(M)AA)" means a copolymer of ethylene (E)/acrylic acid (AA) and/or ethylene/methacrylic acid (MAA), which is at least partially neutralized by one or more alkali metal, transition metal, or alkaline earth metal cations to form an ionomer. Terpolymers can also be made from an olefin such as ethylene, an unsaturated carboxylic acid and other comonomers such as alkyl (meth)acrylates to provide "softer" resins that can be neutralized to form softer ionomers. Ionomers are known conventionally and their method of preparation is described in, e.g., US Patent 3,344,014.

Anhydride or acid-modified ethylene and propylene homo- and copolymers can be used as extrudable adhesive layers (also known as "tie" layers) to improve bonding of layers of polymers together when the polymers do not adhere well to each other, thus improving the layer-to-layer adhesion in a multilayer structure. One skilled in the polymer art can select the appropriate tie layer based on the other materials used in the structure. Various tie layer compositions are commercially available, such as, Bynel^{®} from DuPont, for example.

Polyethylene vinyl alcohol (EVOH) having from 20 to 50 mole % ethylene can be used. Suitable EVOH copolymers are commercially available, e.g., EVAL^{®} from Kuraray or Soarnol^{®} from Nippon Goshei.

Polyvinylidene chloride (PVDC) polymers and copolymers suitable for use herein can be obtained commercially from Dow Chemical under the tradename Saran^{®}, for example.

The manufacture of a film used as a second substrate can be carried out according to any known methods. For example, to manufacture a primary film by extruding the compositions one may use so-called "blown film" or "flat die" methods. A blown film is prepared by extruding the polymeric composition through an annular die and expanding the resulting tubular film with an air current to provide a blown film. A cast flat film is prepared by extruding the composition through a flat die. The film leaving the die is cooled by at least one roll containing internally circulating fluid (a chill roll) or by a water bath to provide a cast film. The film can be sized by conventional techniques such as slitting to provide a packaging film. The width of the film can be about 60 cm (two feet).

A film can be further oriented beyond the immediate quenching or casting of the film comprising extruding a laminar flow of molten polymer, quenching the extrudate, and orienting the quenched extrudate in at least one or more directions. "Quenched" describes an extrudate that has been substantially cooled below its melting point to obtain a solid film material.

The film can be unoriented, oriented in a uniaxial direction (e.g. machine direction), or oriented in a biaxial direction (e.g. machine direction and transverse direction) as it is well known to one skilled in the art. See, e.g., US Patents 3,278,663; 3,337,665; 3,456,044; 4,590,106; 4,760,116; 4,769,421; 4,797,235 and 4,886,634, the descriptions of which are omitted herein for the interest of brevity. For example, a blown film may be oriented using a double bubble extrusion process, where simultaneous biaxial orientation may be effected by extruding a primary tube which is subsequently quenched, reheated and then expanded by internal gas pressure to induce transverse orientation, and drawn by differential speed nip or conveying rollers at a rate which induces longitudinal orientation. Biaxially orientation can be done by drawing in two mutually perpendicular directions in the plane of the film to achieve a satisfactory combination of mechanical and physical properties.

Also for example, a film can be formed by an extrusion process that causes the polymer chains in the film to be generally aligned in the direction of extrusion. Linear polymers, after being highly oriented uniaxially possess considerable strength in the orientation direction, but less strength in the transverse direction.

The films used as substrates may be surface-treated by means of corona discharge, ozone or other means standard in the industry, although treatment is not required for good adhesion.

The thickness of the adhesive layer is preferably between 10 and 40 µm or 15 and 30 µm thick.

The multilayer structures may be useful in a wide variety of packaging applications as packaging materials, as industrial films, or as a thermoformable web.

The packaging materials may also be processed further by, for example, printing, embossing, and/or coloring to provide a packaging material to provide information to the consumer about the product therein and/or to provide a pleasing appearance of the package.

Specific multilayer structures are listed below in which the adhesive tie layer is prepared from an ethylene/alkyl (meth)acrylate-polyolefin composition of this invention, wherein "tie" refers to an, extrudable adhesive or tie layer as described above and wherein "adh" refers to an adhesive system.
PVC/tie/ PCTFE;
PET/tie/ PCTFE; or
Nylon/adh/PET/tie/PCTFE.

The multilayer structures may be incorporated into package, such as blister packs, pouches and containers, including lidded containers, by standard methods well known in the art. Accordingly, the invention provides packages comprising the ethylene/alkyl (meth)acrylate-polyolefin compositions and/or multilayer structures described above.

A PCTFE layer can be adhered to a layer of PVC or polyester with a composition of this invention to create the forming structure. The PVC or PET can be used to provide bulk to the structure, as either is far less expensive than the PCTFE. Both materials provide high clarity and formability.

PCTFE film may become the innermost layer and sealing substrate for the heat sealable top web, allowing the final package to realize the full barrier properties of the PCTFE, leading to longer shelf life.

The package can be in the form of a thermoformed blister pack comprising a structure comprising at least one layer comprising the ethylene/alkyl (meth)acrylate-polyolefin-tackifier composition disclosed above, at least one layer comprising a fluoropolymer (e.g., PCTFE); and at least one layer including foil, paperboard, HDPE, PP, HIPS, APET, CPET, PVC, polyacrylonitrile homopolymers and copolymers, polyacetal and polyacetal copolymers, or combinations of two or more thereof.

Packages or containers include molded, pressed or thermoformed rigid containers comprising a structure comprising at least one layer selected from the group consisting of foil, paperboard, glass, high-density HDPE, PP, HIPS, expanded polystyrene (EPS), acrylic homopolymers and acrylic copolymers, polycarbonate, polysulfone, APET, CPET, PVC, PCTFE, polyacrylonitrile homopolymers and copolymers, polyacetal and polyacetal copolymers, or combinations of two or more thereof with a peelable lid comprising the ethylene/alkyl (meth)acrylate-polyolefin compositions and/or multilayer structures described above. In addition to the materials listed above, a container may contain other materials. For example, a polymeric resin may be modified by various additives to provide a modified polymeric blend suitable for preparing containers, such as toughened CPET. The materials can also be modified with other additives such as denesting agents and can also be modified with additives such as fillers. The containers can be multilayer containers containing an innermost product contact layer, an inner layer that can be a barrier or bulking layer and an outer or abuse layer.

Such containers may be used to package products such as yogurts, puddings, custards, gelatins and fruit sauces (for example, applesauce).

They may also be used to package cheese spreads and dips.

Packages may also include flexible films (e.g., pouches). Pouches are typically made from overlying sheets of flexible film, permanently sealed around the pouch's peripheral edges. Pouches can be used as packages for dry foods such as noodles and seasoning for reconstitution with water; dry snacks such as cookies and chips, and meats and frozen or refrigerated meals.

Other applications for fluoropolymer-containing multilayer structures include fuel line hoses and related containers and in retroflective sheeting materials, films, containers, or tubing that require specific combinations of barrier properties, high and low temperature resistance, and chemical resistance. For example, increased concerns with fuel evaporation standards give rise to a need for fuel system components that have increased barrier properties to minimize the permeation of fuel vapors through automotive components including fuel filler lines, fuel supply lines, fuel tanks, and other components of the engine's fuel control system; and for films and blow-molded articles such as bottles, where chemical resistance and barrier properties are important.

The following examples are merely illustrative, and are not to be construed as limiting the scope of the invention.

### EXAMPLES

Compositions were prepared from the materials listed below using standard blending techniques of dry blending followed by melt compounding in an extruder to provide Examples 1 through 12, compositions of this invention, summarized in Tables 1 through 3 below.

### Materials Used

EMA-7: An ethylene/methyl acrylate (9 weight %) copolymer with MI of 6 available from DuPont.
EMA-8: An ethylene/ methyl acrylate (20 weight %) copolymer with MI of 8 available from DuPont.
EMA-9: An ethylene/ methyl acrylate (13 weight %) copolymer with MI of 9 available from DuPont.
PE-1: A copolymer of ethylene and 1-butene with MI of 3.5 (available as Exact^{®} 3035 from ExxonMobil).
PE-2: A copolymer of ethylene and 1-octene (12 weight % octane) with Mi of 3.5 (available as Engage^{®} 8450 from DuPont DoW Elastomers).
PE-3: A low-density polyethylene available from DuPont.
Add-1: 2 weight % of silicon dioxide dispersion in an ethylene/ methacrylic acid copolymer (available from DuPont as Conpol^{®} 20S2).
Tack-1:A tackifier resin derived from poly-limonene available as Piccolyte^{®} C115 from Pinova.
Tack-2: A tackifier resin available as Regalite R1125 from Eastman.
Filler-1: A masterbatch pre-blend of 50 weight % of talc and 50 weight % of EMA-8. When Filler-1 was reported present in a composition, the actual amount of filler (i.e. talc) present was half of the weight % reported. Further, when Filler-1 was reported present in a composition half of the weight % reported was an amount of an ethylene/alkyl acrylate that was in addition to the amount of any other ethylene/alkyl acrylate in the composition.
Filler-2: High Impact Polystyrene (available as FX510 from Nova Chemical Company).
Antiox-1: Antioxidant Irganox^{®} 1010.

The compositions are summarized in Tables 1 through 3, with amounts listed as parts by weight. "- -" means a component was not present in the composition.

**Table 1**

| Ex. | EMA copolymer | | PE-1 | Tack-1 | Add-1 | Antiox-1 |
|---|---|---|---|---|---|---|
| 1 | EMA-7 | 52.95 | 30 | 15 | 2 | 0.05 |
| 2 | EMA-7 | 62.95 | 20 | 15 | 2 | 0.05 |
| 3 | EMA-7 | 42.95 | 40 | 15 | 2 | 0.05 |
| 4 | EMA-9 | 52.95 | 30 | 15 | 2 | 0.05 |
| 5 | EMA-9 | 82.95 | -- | 15 | 2 | 0.05 |

**Table 2**

| Ex. | EMA copolymer | | PE-2 | Tack-1 | Add-1 | Filler-1 | Antiox-1 |
|---|---|---|---|---|---|---|---|
| 6 | EMA-7 | 50.95 | 27.5 | 15 | 1.5 | 5 | 0.05 |
| 7 | EMA-7 | 45.45 | 23 | 15 | 1.5 | 15 | 0.05 |
| 8 | EMA-7 | 42.95 | 20.5 | 15 | 1.5 | 20 | 0.05 |
| 9 | EMA-7 | 40.45 | 18 | 15 | 1.5 | 25 | 0.05 |
| 10 | EMA-7 | 52.95 | 30 | 15 | 2 | -- | 0.05 |
| 11 | EMA-7 | 52.95 | 26.25 | 18.75 | 2 | -- | 0.05 |

**Table 3**

| Ex. | EMA copolymer | | PE-T | Tack-1 | Add-1 | Filler-1 | Antiox-1 |
|---|---|---|---|---|---|---|---|
| 12 | EMA-9 | 47.95 | 25 | 15 | 2 | 10 | 0.05 |

### Example 13

A multilayer structure comprising the composition of Example 10 as an adhesive layer was prepared by extrusion lamination on an Egan lamination machine. Example 10 composition was fed into an extruder with the following temperature profile °C (°F) through a flat die:
feed zone. 177 (350), zone 2: 243 (470), zone 3: 254 (490), metering zone: 254 (490),
adapter: 254 (490), die: 254 (490).

The resulting melt curtain was laid down at a nominal range of from 0.5 to 1.3 µm (0.02 to 0.05 mil) between a 229 µm (9 mil) PVC primary substrate and a 23 µm (0.9 mil) PCTFE secondary film substrate at a line speed of 91m (300 feet) per minute (fpm) and nipped between a matte finishing roll and a Teflon^{®} pressure roll. The substrates had no surface treatment.

### Example 14

A two-layer structure comprising the composition of Example 10 as an adhesive coating layer on a 23 µm (0.9 mil) PCTFE film substrate was prepared by extrusion coating on an Egan lamination machine using processing conditions similar to Example 13.

### Example 15

A 229 µm (9 mil) PVC 0.5 to 1.3 µm (0.02 to 0.05mil) tie 23 µm (0.9 mil) PCTFE three-layer structure comprising the composition of Example 10 as an adhesive tie layer was prepared by extrusion lamination on a lamination machine using processing conditions similar to Example 13.

### Example 16

A 229 µm (9 mil) PET 0.5 to 1.3 µm (0.02 to 0.05mil) tie 23 µm (0.9 mil) PCTFE three-layer structure comprising the composition of Example 10 as an adhesive tie layer was prepared by extrusion lamination on a lamination machine using processing conditions similar to Example 13.

### Example 17

A four-layer structure comprising the composition of Example 10 as an adhesive heat seal coating layer on a 229 µm (9 mil) PVC/0.5 to 1.3 µm (0.02 to 0.05mil) tie/23 µm (0.9 mil) PCTFE substrate was prepared by extrusion coating the PCTFE surface of the Example 9 three-layer laminate on a lamination machine using processing conditions similar to Example 13. Alternatively, the tour-layer structure could have been prepared in a single pass through a lamination machine with tandem capability (i.e. a machine with a second lamination assembly) by laying down a melt curtain of the Example 10 composition between the PVC and PCTFE substrate in the first lamination assembly and then extrusion coating the PCTFE surface with the Example 10 composition in the second lamination assembly.

### Example 18

A four-layer structure comprising the composition of Example 10 as an adhesive heat seal coating layer on a 229 µm PET / 0.5 to 1.3 µm tie/23 µm PTCFE (9 mil PET/0.02 to 0.05mil tie/0.9 mil PCTFE) substrate was prepared by extrusion coating the PCTFE surface of the Example 10 three-layer laminate on a lamination machine using processing conditions similar to Example 13. Alternatively, the four-layer structure could have been prepared in a single pass through a lamination machine with tandem capability (i.e. a machine with a second lamination assembly) by laying down a melt curtain of the Example 10 composition between the PVC and PCTFE substrate in the first lamination assembly and then extrusion coating the PCTFE surface with the Example 10 composition in the second lamination assembly.

### Example 19

A four-layer structure comprising the composition of Example 10 as an adhesive tie layer and heat seal layer was prepared by coextrusion through a laminar die, providing a 229 µm PET/0.5 to 1.3 µm tie/23µm PCTFE/0.5 to 1.3 µm (9 mil PVC/0.02 to 0.05mil tie/ 0.9 mil PCTFE/0.02 to 0.05 mil) sealant structure.

### Example 20

A four-layer structure comprising the composition of Example 10 as an adhesive tie layer and heat seal layer was prepared by coextrusion through a laminar die, providing a 229 µm PET/0.5 to 1.3 µm tie/23 µm PCTFE/ 0.5 to 1.3 µm (9 mil PET/0.02 to 0.05mil tie/ 0.9 mil PCTFE/0.02 to 0.05mil) sealant structure.

### Examples 21 through 25

Compositions were prepared by blending the materials listed in Tables 4 and 5 using standard blending techniques of dry blending followed by melt compounding in an extruder to provide Examples 21 through 25, compositions of this invention. A melt-blend of 80 weight % of Tack-1 and 20 weight % of PE-2 was used as the source of Tack-1 (with supplemental PE-2) in these compositions (the amounts reported for those components in Tables 4 and 5 are the total amounts after incorporation of the pre-blend).

**Table 4**

| Ex. | EMA copolymer | | PE-2 | Tack-1 | PE-3 | Filler-1 | Antiox-1 |
|---|---|---|---|---|---|---|---|
| 21 | EMA-7 | 24.95 | 13 | 12 | 25 | 25 | 0.05 |
| 22 | EMA-7 | 14.95 | 18 | 12 | 25 | 30 | 0.05 |
| 23 | EMA-7 | 14.95 | 13 | 12 | 30 | 30 | 0.05 |

**Table 5**

| Ex. | EMA copolymer | | PE-2 | Tack-1 | PE-3 | Filler-2 | Antiox-1 |
|---|---|---|---|---|---|---|---|
| 24 | EMA-7 | 34.95 | 18 | 12 | 25 | 10 | 0.05 |
| 25 | EMA-7 | 34.95 | 13 | 12 | 25 | 15 | 0.05 |

### Tests Employed in Examples

Peel Strength: Seal layers were sealed to substrates using standard sealing equipment and conditions to provide 25.4 mm (one-inch) wide sealed strips. The layers were separated at the seal layer/substrate interface unless otherwise noted and pulled in a tensile tester at room temperature in a "T-peel" configuration at a separation speed of 12 inches/minute. The average force required to separate the layers divided by the width is reported as the peel strength (g/cm) ((g/inch)). Typically, from three to ten separate determinations were averaged together and reported.

Samples of the Example 13 multilayer structure were tested for peel strength. The average for 10 samples was 965 g/cm (380 g/inch).

### Example 26

The multilayer structure of Example 9 film was thermoformed into blister pack blanks using a Medipak Model CP-2I packaging machine (upper and lower forming temperatures 115°C).

## Claims

1. A multilayer structure comprising
at least a first layer comprising a composition comprising or produced from (a) 10 to 80 weight % of at least one ethylene/alkyl (meth)acrylate copolymer; (b) 5 to 60 weight % of at least one polyolefin; (c) 0.5 to 35 weight % of at least one tackifying resin; and (d) 0 to 35 weight % of filler;
wherein the ethylene copolymer comprises repeat units derived from ethylene, an alkyl (meth)acrylate, and an optional comonomer, wherein the optional comonomer includes maleic anhydride, glycidyl methacrylate, carbon monoxide, or combinations of two or more thereof;
wherein the polyolefin includes polyethylene homopolymer, polypropylene homopolymer, copolymer comprising ethylene, or copolymer comprising propylene, or combinations of two or more thereof;
wherein the tackifying resin includes coumarone-indene resin, terpene resin, butadiene-styrene resin, hydrocarbon resin, rosin material, or combinations of two or more thereof; and
wherein the optional filler includes particles of inorganic compound, at least a second layer comprising at least one fluoropolymer, and
optionally one or more optional layers comprising foil, paper, polyester, polyamide, polyolefin, polyethylene vinyl alcohol, polyethylene vinyl acetate, ethylene acid copolymer, ionomer of the ethylene acid copolymer, polyvinyl chloride, polyvinylidene chloride, anhydride-modified polyolefin, or combinations of two or more thereof.

2. The multilayer structure of claim 1 wherein the composition comprises (a) 15 to 70 weight % of at least one ethylene/alkyl (meth)acrylate copolymer; (b) 15 to 45 weight % of at least one polyolefin; and (c) 10 to 20 weight % of at least one tackifying resin.

3. The multilayer structure of claim 2 wherein the composition comprises (a) 40 to 70 weight % of at least one ethylene/alkyl (meth)acrylate copolymer; (b) 15 to 45 weight % of at least one polyolefin; and (c) 10 to 20 weight % of at least one tackifying resin.

4. The multilayer structure of any of claims 1 to 3 wherein the ethylene copolymer is present in the composition from 40 to 70 weight %; the ethylene copolymer comprises repeat units derived from 5 to 30 weight % of C₁₋₄ alkyl (meth)acrylate and preferably the ethylene copolymer comprises repeat units derived from 9 to 24 weight % of methyl acrylate.

5. The multilayer structure of any of claims 1 to 4 wherein the ethylene copolymer comprises repeat units derived from the optional comonomer and has a melt index from 0.1 to 100 g/10 minute, 0.5 to 50 g/10 minute, or 0.5 to 30 g/10 min; the ethylene copolymer optionally comprises two different copolymers each derived from ethylene and methyl acrylate; and the polyolefin is a copolymer derived from ethylene and 1-butene, 1-octene, or combinations thereof.

6. The multilayer structure of any of claims 1 to 5 wherein the tackifying resin is derived from poly-limonene.

7. The multilayer structure of any of claims 1 to 6 wherein the ethylene copolymer is a tubular reactor-produced ethylene copolymer.

8. The multilayer structure of any of claims 1 to 7 wherein the fluoropolymer is polychlorotrifluoroethylene and the optional layer comprises polyvinyl chloride, polyethylene terephthalate or combinations thereof.

9. The multilayer structure of claim 8 comprising the optional layer and the multilayer structure include a thermoformable web or a flexible film.

10. A package comprising or produced from a multilayer structure of any of claims 1 to 9 wherein the package includes molded container, pressed container, thermoformed rigid container, a blister pack, a thermoformed blister pack or combinations of two or more thereof.

11. The package of claim 10 comprising
a substrate layer including foil, paperboard, glass, high-density polyethylene, polypropylene, high-impact polystyrene, expanded polystyrene, acrylic homopolymers, and acrylic copolymers, polycarbonate, polysulfone, amorphous polyethylene terephthalate, crystalline polyethylene terephthalate, polyvinyl chloride, a fluoropolymer, polyacrylonitrile homopolymers and copolymers, polyacetal, polyacetal copolymers, or combinations of two or more thereof;
a peelable lid comprising at least a first layer and at least a second layer; the first layer comprises or is produced from a composition as recited in any of claims 1 to 7; and the second layer comprises or is produced from a fluoropolymer, preferably polychlorotrifluoroethylene; and
the package is a container, a pouch, or both.

12. A process comprising adhering a composition as recited in any of claims 1 to 7 to (1) an article comprising or produced from a fluoropolymer, preferably polychlorotrifluoroethylene; (2) an optional layer; or both (1) and (2), wherein the optional layer is foil, paper, polyester, polyamide, polyolefin, polyethylene vinyl alcohol, polyethylene vinyl acetate, ethylene acid copolymer, ionomer of the ethylene acid copolymer, polyvinyl chloride, polyvinylidene chloride, anhydride-modified polyolefin, or combinations of two or more thereof.

13. Use of a composition as recited in any of claims 1 to 7 to adhere the composition onto a first substrate, a second substrate, or both, wherein the first substrate is a fluoropolymeric material; wherein the second substrate is foil, paper, polyester, polyamide, polyolefin, polyethylene vinyl alcohol, polyethylene vinyl acetate, ethylene acid copolymer, ionomer of the ethylene acid copolymer, polyvinyl chloride, polyvinylidene chloride, anhydride-modified polyolefin, or combinations of two or more thereof; and wherein the first substrate, the second substrate, or both, is optionally in the form of film or sheet.

## Patentansprüche

1. Mehrschichtige Struktur, die aufweist:
mindestens eine erste Schicht mit einer Zusammensetzung, die aufweist oder hergestellt wird aus
(a) 10 bis 80 Gew.-% mindestens eines Ethylen/Alkyl(meth)acrylat-Copolymers ;
(b) 5 bis 60 Gew.-% mindestens eines Polyolefins;
(c) 0,5 bis 35 Gew.-% mindestens eines klebrigmachenden Harzes; und
(d) 0 bis 35 Gew.-% Füllstoff;
wobei das Ethylen-Copolymer von Ethylen abgeleitete Strukturelemente, ein Alkyl(meth)acrylat und ein wahlfreies Comonomer aufweist, wobei das wahlfreie Comonomer Maleinsäureanhydrid, Glycidylmethacrylat, Kohlenmonoxid oder Kombinationen von zwei oder mehreren dieser Bestandteile enthält;
wobei das Polyolefin Polyethylen-Homopolymer, Polypropylen-Homopolymer, Copolymer mit Ethylen oder Copolymer mit Propylen oder Kombinationen von zwei oder mehreren dieser Bestandteile enthält;
wobei das klebrigmachende Harz Cumaron-Inden-Harz, Terpenharz, Butadien-Styrol-Harz, Kohlenwasserstoffharz, Kolophoniummaterial oder Kombinationen von zwei oder mehreren dieser Bestandteile enthält; und
wobei der wahlfreie Füllstoff Teilchen einer anorganischen Verbindung enthält,
mindestens eine zweite Schicht mit mindestens einem Fluorpolymer, und
wahlweise eine oder mehrere Schichten, die Folie, Papier, Polyester, Polyamid, Polyolefin, Polyethylenvinylalkohol, Polyethylenvinylacetat, Ethylen-Säure-Copolymer, Ionomer von Ethylen-Säure-Copolymer, Polyvinylchlorid, Polyvinylidenchlorid, anhydrid-modifiziertes Polyolefin oder Kombinationen von zwei oder mehreren dieser Bestandteile aufweisen.

2. Mehrschichtige Struktur nach Anspruch 1, wobei die Zusammensetzung aufweist:
(a) 15 bis 70 Gew.-% mindestens eines Ethylen/Alkyl(meth)acrylat-Copolymers;
(b) 15 bis 45 Gew.-% mindestens eines Polyolefins; und
(c) 10 bis 20 Gew.-% mindestens eines klebrigmachenden Harzes.

3. Mehrschichtige Struktur nach Anspruch 2, wobei die Zusammensetzung aufweist:
(a) 40 bis 70 Gew.-% mindestens eines Ethylen/Alkyl(meth)acrylat-Copolymers;
(b) 15 bis 45 Gew.-% mindestens eines Polyolefins; und
(c) 10 bis 20 Gew.-% mindestens eines klebrigmachenden Harzes.

4. Mehrschichtige Struktur nach einem der Ansprüche 1 bis 3, wobei das Ethylen-Copolymer in der Zusammensetzung in einem Anteil von 40 bis 70 Gew.-% anwesend ist; das Ethylen-Copolymer Strukturelemente aufweist, die von 5 bis 30 Gew.-% C₁₋₄-Alkyl(meth)acrylat abgeleitet sind, und vorzugsweise das Ethylen-Copolymer Strukturelemente aufweist, die von 9 bis 24 Gew.-% Methylacrylat abgeleitet sind.

5. Mehrschichtige Struktur nach einem der Ansprüche 1 bis 4, wobei das Ethylen-Copolymer Strukturelemente aufweist, die von dem wahlfreien Comonomer abgeleitet sind, und einen Schmelzindex von 0,1 bis 100 g/10 Minuten, 0,5 bis 50 g /10 0 Minuten oder 0,5 bis 30 g /10 0 Minuten aufweist; wobei das Ethylen-Copolymer wahlweise zwei verschiedene Copolymere aufweist, die von Ethylen bzw. Methylacrylat abgeleitet sind; und wobei das Polyolefin ein Copolymer ist, das von Ethylen und 1-Buten, 1-Octen oder Kombinationen davon abgeleitet ist.

6. Mehrschichtige Struktur nach einem der Ansprüche 1 bis 5, wobei das klebrigmachende Harz von Polylimonen abgeleitet ist.

7. Mehrschichtige Struktur nach einem der Ansprüche 1 bis 6, wobei das Ethylen-Copolymer ein im Röhrenreaktor erzeugtes Ethylen-Copolymer ist.

8. Mehrschichtige Struktur nach einem der Ansprüche 1 bis 7, wobei das Fluorpolymer Polychlornifluorethylen ist und die wahlfreie Schicht Polyvinylchlorid, Polyethylenterephthalat oder Kombinationen davon aufweist.

9. Mehrschichtige Struktur nach Anspruch 8 mit der wahlfreien Schicht, wobei die mehrschichtige Struktur eine warm formbare Bahn oder eine flexible Folie einschließt.

10. Verpackung, die eine mehrschichtige Struktur nach einem der Ansprüche 1 bis 9 aufweist oder daraus erzeugt wird, wobei die Verpackung einen geformten Behälter, gepreßten Behälter, warm geformten steifen Behälter, eine Blisterpackung, eine warmgeformte Blisterpackung oder Kombinationen von zwei oder mehreren dieser Verpackungen einschließt.

11. Verpackung nach Anspruch 10, die aufweist:
eine Substratschicht, die Folie, Pappe, Glas, Polyethylen hoher Dichte, Polypropylen, hochschlagfestes Polystyrol, Schaumpolystyrol, Acryl-Homopolymere und Acryl-Copolymere, Polycarbonat, Polysulfon, amorphes Polyethylenterephthalat, kristallines Polyethylenterephthalat, Polyvinylchlorid, ein Fluorpolymer, Polyacrylnitril-Homopolymere und -Copolymere, Polyacetal, Polyacetal-Copolymere oder Kombinationen von zwei oder mehreren dieser Bestandteile enthält;
einen abziehbaren Deckel, der mindestens eines erste Schicht und mindestens eine zweite Schicht aufweist; wobei die erste Schicht eine Zusammensetzung nach einem der Ansprüche 1 bis 7 aufweist oder daraus hergestellt ist; und wobei die zweite Schicht ein Fluorpolymer, vorzugsweise Polychlortrifluorethylen, aufweist oder daraus hergestellt ist; und
wobei die Verpackung ein Behälter, ein Beutel oder beides ist.

12. Verfahren mit Ankleben einer Zusammensetzung nach einem der Ansprüche 1 bis 7 an (1) einen Artikel, der ein Fluorpolymer, vorzugsweise Polychlortrifluorethylen, aufweist oder daraus hergestellt ist; (2) eine wahlfreie Schicht; oder sowohl an (1) als auch an (2), wobei die wahlfreie Schicht Folie, Papier, Polyester, Polyamid, Polyolefin, Polyethylenvinylalkohol, Polyethylenvinylacetat, Ethylen-Säure-Copolymer, Ionomer von Ethylen-Säure-Copolymer, Polyvinylchlorid, Polyvinylidenchlorid, anhydrid-modifiziertes Polyolefin oder Kombinationen von zwei oder mehreren dieser Bestandteile aufweist oder daraus hergestellt ist.

13. Verwendung einer Zusammensetzung nach einem der Ansprüche 1 bis 7 zum Ankleben der Zusammensetzung an ein erstes Substrat, ein zweites Substrat oder beide, wobei das erste Substrat ein Fluorpolymermaterial ist; wobei das zweite Substrat aus Folie, Papier, Polyester, Polyamid, Polyolefin, Polyethylenvinylalkohol, Polyethylenvinylacetat, Ethylen-Säure-Copolymer, Ionomer von Ethylen-Säure-Copolymer, Polyvinylchlorid, Polyvinylidenchlorid, anhydrid-modifiziertem Polyolefin oder Kombinationen von zwei oder mehreren dieser Bestandteile besteht; und wobei das erste Substrat, das zweite Substrat oder beide wahlweise in Form eines Films oder eines Blatts vorliegen.

## Revendications

1. Structure multicouche comprenant
au moins une première couche comprenant une composition comprenant ou produite à partir de
(a) 10 à 80 % en poids d'au moins un copolymère d'éthylène/(méth)acrylate d'alkyle; (b) 5 à 60 % en poids d'au moins une polyoléfine; (c) 0,5 à 35 % en poids d'au moins une résine donnant du collant; et (d) 0 à 35 % en poids d'une charge;
dans laquelle le copolymère d'éthylène comprend des motifs de répétition dérivés de l'éthylène, un (méth)acrylate d'alkyle, et un comonomère facultatif, dans laquelle le comonomère facultatif inclut de l'anhydride maléique, du méthacrylate de glycidyle, du monoxyde de carbone, ou des combinaisons de deux ou de plusieurs d'entre eux;
dans laquelle la polyoléfine inclut un homopolymère de polyéthylène, un homopolymère de polypropylène, un copolymère comprenant de l'éthylène, ou un copolymère comprenant du propylène, ou des combinaisons de deux ou plusieurs d'entre eux;
dans laquelle la résine donnant du collant inclut une résine de type coumarone-indène, une résine de type terpène, une résine de type butadiène-styrène, une résine de type hydrocarbure, un matériau de type colophane, ou des combinaisons de deux ou plusieurs d'entre eux; et
dans laquelle la charge facultative inclut des particules de composé inorganique,
au moins une seconde couche comprenant au moins un polymère fluoré, et
éventuellement une ou plusieurs couche(s) facultative(s) comprenant un feuil, du papier, du polyester, du polyamide, une polyoléfine, du polyéthylène-alcool de vinyle, du polyéthylène-acétate de vinyle, un copolymère d'éthylène-acide, un ionomère du copolymère d'éthylène-acide, du poly(chlorure de vinyle), du poly(chlorure de vinylidène), une polyoléfine modifiée par un anhydride, ou des combinaisons de deux ou plusieurs d'entre eux.

2. Structure multicouche selon la revendication 1, dans laquelle la composition comprend (a) 15 à 70 % en poids d'au moins un copolymère d'éthylène/(méth)acrylate d'alkyle; (b) 15 à 45 % en poids d'au moins une polyoléfine; et (c) 10 à 20 % en poids d'au moins une résine donnant du collant.

3. Structure multicouche selon la revendication 2, dans laquelle la composition comprend (a) 40 à 70 % en poids d'au moins un copolymère d'éthylène/(méth)acrylate d'alkyle; (b) 15 à 45 % en poids d'au moins une polyoléfine; et (c) 10 à 20 % en poids d'au moins une résine donnant du collant.

4. Structure multicouche selon l'une quelconque des revendications 1 à 3, dans laquelle le copolymère d'éthylène est présent dans la composition en une teneur allant de 40 à 70 % en poids; le copolymère d'éthylène comprend des motifs de répétition dérivés de 5 à 30 % en poids de (méth)acrylate d'alkyle en C₁₋₄ et de préférence le copolymère d'éthylène comprend des motifs de répétition dérivés de 9 à 24 % en poids d'acrylate de méthyle.

5. Structure multicouche selon l'une quelconque des revendications 1 à 4, dans laquelle le copolymère d'éthylène comprend des motifs de répétition dérivés du comonomère facultatif et a un indice de fusion de 0,1 à 100 g/10 minutes, 0,5 à 50 g/10 minutes, ou 0,5 à 30 g/10 min; le copolymère d'éthylène comprend éventuellement deux copolymères différents dérivés chacun de l'éthylène et de l'acrylate de méthyle; et la polyoléfine est un copolymère dérivé de l'éthylène et du 1-butène, du 1-octène, ou de combinaisons de ceux-ci.

6. Structure multicouche selon l'une quelconque des revendications 1 à 5, dans laquelle la résine donnant du collant est dérivée du poly-limonène.

7. Structure multicouche selon l'une quelconque des revendications 1 à 6, dans laquelle le copolymère d'éthylène est un copolymère d'éthylène produit dans un réacteur tubulaire.

8. Structure multicouche selon l'une quelconque des revendications 1 à 7, dans laquelle le polymère fluoré est le polychlorotrifluoroéthylène et la couche facultative comprend du poly(chlorure de vinyle), du poly(téréphtalate d'éthylène) ou des combinaisons de ceux-ci.

9. Structure multicouche selon la revendication 8 comprenant la couche facultative, la structure multicouche incluantt un voile thermoformable ou un film souple.

10. Emballage comprenant ou produit à partir d'une structure multicouche selon l'une quelconque des revendications 1 à 9, dans lequel l'emballage inclut un récipient moulé, un récipient pressé, un récipient rigide thermoformé, un pack pour blister, un pack pour blister thermoformé ou des combinaisons de deux ou plusieurs d'entre eux.

11. Emballage selon la revendication 10 comprenant
une couche formant substrat incluant un feuil, du carton, du verre, du polyéthylène haute densité, du polypropylène, du polystyrène à forte résistance aux chocs, du polystyrène expansé, des homopolymères acryliques et des copolymères acryliques, du polycarbonate, une polysulfone, du poly(téréphtalate d'éthylène) amorphe, du poly(téréphtalate d'éthylène) cristallin, du poly(chlorure de vinyle), un polymère fluoré, des homopolymères et des copolymères de polyacrylonitrile, un polyacétal, des copolymères de polyacétal, ou des combinaisons de deux ou plusieurs d'entre eux;
un couvercle décollable comprenant au moins une première couche et au moins une seconde couche; la première couche comprend ou est produite à partir d'une composition telle qu'énoncée selon l'une quelconque des revendications 1 à 7; et la seconde couche comprend ou est produite à partir d'un polymère fluoré, de préférence du polychlorotrifluoroéthylène; et
l'emballage est un récipient, une poche, ou les deux.

12. Procédé comprenant l'adhésion d'une composition tel qu'énoncé selon l'une quelconque des revendications 1 à 7 à
(1) un article comprenant ou produit à partir d'un polymère fluoré, de préférence du polychlorotrifluoroéthylène; (2) une couche facultative; ou à la fois (1) et (2), dans lequel la couche facultative est un feuil, du papier, du polyester, du polyamide, une polyoléfine, du polyéthylène-alcool de vinyle, du polyéthylène-acétate de vinyle, un copolymère d'éthylène-acide, un ionomère du copolymère d'éthylène-acide, du poly(chlorure de vinyle), du poly(chlorure de vinylidène), une polyoléfine modifiée par un anhydride, ou des combinaisons de deux ou plusieurs d'entre eux.

13. Utilisation d'une composition tel qu'énoncé selon l'une quelconque des revendications 1 à 7, pour faire adhérer la composition sur un premier substrat, un second substrat, ou les deux, dans laquelle le premier substrat est un matériau de type polymère fluoré; dans laquelle le second substrat est un feuil, du papier, du polyester, du polyamide, une polyoléfine, du polyéthylène-alcool de vinyle, du polyéthylène-acétate de vinyle, un copolymère d'éthylène-acide, un ionomère du copolymère d'éthylène-acide, du poly(chlorure de vinyle), du poly(chlorure de vinylidène), une polyoléfine modifiée par un anhydride, ou des combinaisons de deux ou plusieurs d'entre eux; et dans laquelle le premier substrat, le second substrat, ou les deux, se présente(nt) éventuellement sous la forme d'un film ou d'une feuille.
